# EUROPEAN PATENT APPLICATION

(11) **EP 4 810 999 A1**
(43) Date of publication of application: **23.09.2026**
(21) Application number: 24890852.7
(22) Date of filing: 18.11.2024
(51) Int. Cl.: G01S 17/02, G01S 7/481

(54) **LIDAR AND CARRIER**

(30) Priority: 17.11.2023 CN 202311545717; 17.11.2023 CN 202323128741 U
(71) Applicant: Hesai Technology Co., Ltd., Shanghai 201815 (CN)
(72) Inventor: WANG, Ji, Shanghai 201815 (CN); TAO, Jun, Shanghai 201815 (CN); XIANG, Shaoqing, Shanghai 201815 (CN)
(74) Representative: Pfenning, Meinig & Partner mbB
(86) International application number: PCT/CN2024/132591
(87) International publication number: WO 2025/103500

(57) **Abstract**

This disclosure provides a LiDAR, including an optical transceiver module and a scanner module. The optical transceiver module includes a transmitter unit, a transmitting lens unit, a receiver lens unit, and a receiving unit. The transmitter unit is configured to transmit detection light. The transmitting lens unit is configured to transmit the detection light. The receiver lens unit is separated from the transmitting lens unit, and is configured to transmit echo light generated by reflection of the detection light from an object. The receiver unit includes a two-dimensional array detector. The scanner module is configured to receive the detection light and emit the detection light towards an exterior of the LiDAR, and receive the echo light and emit the echo light towards the optical transceiver module.

## Description

This application claims priority to Chinese Patent Application No. 202311545717X, filed with the China National Intellectual Property Administration on [November 17, 2023], and Chinese patent application No. 202323128741.1 filed with the China National Intellectual Property Administration on [November 17, 2023], the contents of which are incorporated herein by reference in their entirety.

### TECHNICAL FIELD

This disclosure relates to the field of LiDAR and, in particular, to a LiDAR and a carrier.

### BACKGROUND

A LiDAR ("Light Detection and Ranging") is a widely used ranging sensor. The LiDAR characterized by long detection range, high resolution, and robustness to environmental interference, and is widely used in unmanned driving, intelligent robots, unmanned aerial vehicles, and other fields. In recent years, autonomous driving technologies have developed rapidly, and the LiDAR, as a core sensor for distance perception, is indispensable.

In the LiDAR, a light beam may be reflected by a reflecting surface of a scanner module, thereby forming a scanning light beam for spatial scanning. The scanner module for the LiDAR may realize scanning of the scanning light beam within a field of the LiDAR through reciprocating motion of the reflecting surface.

In an existing LiDAR, a receiving field of view corresponding to each detector is relatively large, resulting in a weak target resolution capability of the LiDAR. Methods of reducing the receiving field of view and improving the target resolution capability can cause deterioration of aberrations in an optical system of the LiDAR, and can also lead to problems of difficulty in manufacturing and high production costs.

### SUMMARY

Embodiments provided by this disclosure can enhance a target resolution capability of a LiDAR, reduce aberrations, simplify manufacturing, and lower production costs.

In a first aspect, this disclosure provides a LiDAR including an optical transceiver module and a scanner module. The optical transceiver module includes a transmitter unit, a transmitting lens unit, a receiving lens unit, and a receiver unit. The transmitter unit is configured to emit detection light. The transmitting lens unit is configured to transmit the detection light. The receiving lens unit is separated from the transmitting lens unit, and the receiving lens unit is configured to transmit echo light generated by reflection of the detection light from an object. The receiver unit includes a two-dimensional array detector, where the two-dimensional array detector is configured to detect the echo light passing through the receiving lens unit; and the scanner module is configured to receive the detection light and emit the detection light towards an exterior of the LiDAR, and receive the echo light and emit the echo light towards the optical transceiver module.

Optionally, the transmitting lens unit includes a reflector and a transmitting lens. The transmitting lens includes at least one transmitting lens element. The reflector is configured to reflect the detection light to the scanner module.

Optionally, the receiving lens unit includes a receiving lens. The receiving lens includes at least one receiving lens element.

Optionally, a focal length of the receiving lens is determined based on a spacing between adjacent pixels in the two-dimensional array detector and an angular resolution of the LiDAR.

Optionally, the focal length of the receiving lens is not greater than a focal length of the transmitting lens of the transmitting lens unit.

Optionally, a receiving assembly is located between a transmitting assembly and the scanner module. The transmitting assembly includes: the transmitter unit and the transmitting lens unit. The receiving assembly includes: the receiver unit and the receiving lens unit.

Optionally, a size of a pixel in the two-dimensional array detector is greater than an optical parameter of the receiving lens.

Optionally, a receiving aperture of the receiving lens is greater than 8 millimeters (mm).

Optionally, a F-number of the receiving lens is less than 4.

Optionally, a laser of the transmitter unit and a two-dimensional array detector of the receiver unit are provided on a same circuit board.

Optionally, the optical transceiver module further includes: a support member. At least the transmitting lens unit is fixed to the support member.

Optionally, the transmitting lens unit and a beam splitter unit are fixed to the support member.

Optionally, the optical transceiver module further includes: a receiving lens support member, where the receiving lens is fixed to the receiving lens support member, and the receiving lens support member is movably connected to the support member.

Optionally, a circuit board fixing the two-dimensional array detector has multiple focusing marks.

Optionally, the receiving lens unit, the transmitting lens unit, and the beam splitter unit are fixed to the support member.

Optionally, the receiver unit includes one two-dimensional array detector, where the two-dimensional array detector includes: multiple detection regions, the multiple detection regions being in one-to-one correspondence with the lasers of the transmitting unit.

Optionally, the multiple detection regions are in one-to-one correspondence with multiple lasers of the transmitter unit.

Optionally, the two-dimensional array detector further includes: a compensation region, where the compensation region encircles the multiple detection regions.

Optionally, the receiver unit includes multiple two-dimensional array detectors, where the multiple two-dimensional array detectors are in one-to-one correspondence with of the multiple lasers of the transmitter unit.

Optionally, the multiple two-dimensional array detectors are arranged in an array. The two-dimensional array detectors in adjacent columns are provided in a staggered manner along a column direction, or two-dimensional array detectors in adjacent rows are provided in a staggered manner along a row direction.

Optionally, the two-dimensional array detector includes multiple pixels.

Optionally, at least one pixel in the multiple pixels includes multiple detection elements.

Optionally, each pixel in the multiple pixels includes multiple detection elements.

Optionally, a detection element is a single-photon detection element.

Optionally, the optical transceiver module further includes: a beam splitter unit. The beam splitter unit is configured to transmit the detection light transmitted by the transmitting lens unit to the scanner module, and is configured to transmit the echo light transmitted by the scanner module to the receiving lens unit.

Optionally, the beam splitter unit includes: a polarization beam splitter element and a wave plate. The wave plate is located in an optical path between the polarization beam splitter element and the scanner module.

Optionally, the wave plate is attached to a surface of the polarization beam splitter element facing the scanner module.

Optionally, the scanner module includes a polygonal mirror. The polygonal mirror includes multiple reflecting surfaces, the multiple reflecting surfaces all rotate around a rotating shaft, where angles between different reflecting surfaces and the rotating shaft are partially the same.

Optionally, the polygonal mirror has an even number of reflecting surfaces, where angles between adjacent reflecting surfaces and the rotating shaft are different, while angles between spaced-apart reflecting surfaces and the rotating shaft are the same.

In a second aspect, provided is a carrier, including the LiDAR in the first aspect and a connector, where the connector is configured to connect the LiDAR to the carrier.

Optionally, the carrier includes at least one of a vehicle, a ship, an aircraft or a robot.

Compared with the prior art, technical solutions of this disclosure have the advantages described below.

In the technical solutions of this disclosure, in the receiver unit, the two-dimensional array detector is used to receive the echo light. Thus, a receiving field of view corresponding to a detector in the LiDAR can be effectively reduced, which is conducive to improving an optical resolution of an optical system of the LiDAR and further improving a target resolution capability of the LiDAR. With respect to the two-dimensional array detector, in the optical transceiver module, the separated transmitting lens unit and receiving lens unit are used to transmit the detection light and the echo light. When different lens units are used to transmit the detection light and the echo light, the detection light and the echo light are not transmitted through the same lens unit. Thus, the aberrations of the transmitting lens unit and the receiving lens unit may be improved, facilitating the mass production. Further, area requirements on the two-dimensional array detector may also be effectively reduced, which is conducive to lowering the costs.

In an optional solution of this disclosure, the focal length of the receiving lens is not greater than the focal length of the transmitting lens of the transmitting lens unit. A transmitting lens with a larger focal length is adapted to a laser with a larger light-emitting area, and a receiving lens with a smaller focal length is adapted to a detector with a smaller photosensitive area. The transmitting lens with the larger focal length and the receiving lens with the smaller focal length are adapted to the laser with the larger light-emitting area and the detector with the smaller photosensitive area, while a transmission field and a reception field match, which is conducive to improving a long-range detection capability of the LiDAR.

In an optional solution of this disclosure, the size of the pixel in the two-dimensional array detector is greater than the optical parameter of the receiving lens. The optical parameter of the receiving lens can be a root-mean-square spot radius of the receiving lens. A relationship between the size of the pixel in the two-dimensional array detector and the optical parameter of the receiving lens may affect point cloud quality and optical resolution received by the two-dimensional array detector. The size of the pixel in the two-dimensional array detector may match the optical parameter of the receiving lens. Thus, the optical resolution of the LiDAR may be improved, which is conducive to acquiring best imaging quality, and improving the point cloud quality of the LiDAR.

In an optional solution of this disclosure, the receiving aperture of the receiving lens is greater than 8 mm. The larger the receiving aperture of the receiving lens, the higher the receiving efficiency of the LiDAR for the echo light, and the stronger the long-range detection capability of the LiDAR. A sufficiently large receiving aperture of the receiving lens can be conducive to improving the receiving efficiency of the echo light and enhancing the long-range detection capability of the LiDAR.

In an optional solution of this disclosure, the F-number of the receiving lens is less than 4. The F-number of a lens, for example, an aperture ratio of the lens, is a ratio of a focal length of the lens to diameter of an entrance pupil thereof. Luminous flux of the lens is inversely proportional to a square of the F-number. The smaller the F-number, the greater the luminous flux. The smaller the F-number of the receiving lens, the larger the receiving aperture of the receiving lens, and the higher the receiving efficiency of the echo light. A sufficiently small F-number of the receiving lens is conducive to improving the receiving efficiency of the echo light.

In an optional solution of this disclosure, the laser of the transmitter unit and the two-dimensional array detector of the receiver unit are provided on a same circuit board. The laser of the transmitter unit and the two-dimensional array detector of the receiver unit are integrated on a common board, which is conducive to the mass production of the LiDAR.

In an optional solution of this disclosure, the two-dimensional array detector further includes the compensation region, where the compensation region encircles the multiple detection regions. The two-dimensional array detector can be driven in an addressable manner. The two-dimensional array detector achieves alignment of the transmission field and the reception field through addressable driving. Compensating for alignment errors between the transmission field and the reception field using the compensation region can reduce difficulty in optical alignment and adjustment, and in some embodiments, an optical alignment and adjustment process may be avoided. This is conducive to adjustment-free alignment of a laser and a detector integrated on the common board.

In an optional solution of this disclosure, the beam splitter unit includes the polarization beam splitter element and the wave plate, where the wave plate is located in the optical path between the polarization beam splitter element and the scanner module. A solution that uses a polarization for beam splitting can effectively improve transmission efficiency under volume constraints of the LiDAR, and is conducive to improving performance of the LiDAR.

In an optional solution of this disclosure, the wave plate is attached to the surface of the polarization beam splitter element facing the scanner module. The wave plate is directly attached to the surface of the polarization beam splitter element, and an anti-reflection coating may not be needed for the wave plate and a bonded surface between the wave plate and the polarization beam splitter element, which can effectively reduce coating costs. Moreover, the wave plate and the polarization beam splitter element are fixedly connected, which is conducive to reducing the number of positioning surfaces, thereby lowering mechanical design complexity and costs, and is also conducive to reducing the number of assembly elements and lowering the production costs. Furthermore, the polarization beam splitter element is of a flat plate structure, and compared with a polarization beam splitter element of a prism structure, costs are lower, which is conducive to further lowering the costs of the LiDAR.

In an optional solution of this disclosure, the scanner module includes the polygonal mirror, where the polygonal mirror includes the multiple reflecting surfaces, the multiple reflecting surfaces rotate around the rotating shaft. The angles between different reflecting surfaces and the rotating shaft are partially the same. The angles between different reflecting surfaces and the rotating shaft are partially the same, thereby achieving adjustment of different field directions, which expands a vertical field range of the LiDAR without increasing design difficulty in the lens and increasing the aperture of the lens, such that the costs are lowered. Furthermore, it is further conducive to reducing a size of the circuit board provided with the laser and the two-dimensional array detector, which is conducive to effectively lowering a height of the LiDAR.

### BRIEF DESCRIPTION OF THE DRAWINGS

To illustrate technical solutions of embodiments of this disclosure more clearly, a brief introduction to accompanying drawings that are used in description of the embodiments or the prior art is given below. It should be noted that, the accompanying drawings depicted below are merely examples used to provide further understanding of this disclosure, and do not constitute limitations on this disclosure.
Fig. 1 shows a functional block diagram of an exemplary LiDAR consistent with some embodiments of this disclosure.
Fig. 2 shows a structure of a transmitter unit of the exemplary LiDAR consistent with some embodiments of this disclosure.
Fig. 3 shows a structure of an optical path of the exemplary LiDAR consistent with some embodiments of this disclosure.
Fig. 4 shows a field of the exemplary LiDAR consistent with some embodiments of this disclosure.
Fig. 5 shows a functional block diagram of another exemplary LiDAR consistent with some other embodiments of this disclosure.
Fig. 6 shows a structure of an optical path of another exemplary LiDAR consistent with some other embodiments of this disclosure..
Fig. 7 shows a structure of a transmitter unit of another exemplary LiDAR consistent with some other embodiments of this disclosure.

### DETAILED DESCRIPTION

In this disclosure, it should be understood that an orientation or positional relationship indicated by terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise" is based on an orientation or positional relationship shown in the accompanying drawings, and is merely for convenience of describing this disclosure and simplifying the description, rather than indicate or imply that equipment or an element referred to must have a specific orientation, be configured and operated in a specific orientation, and therefore cannot be understood as a limitation on this disclosure. In addition, terms "first" and "second" are merely for a descriptive purpose and cannot be understood as indicating or implying relative importance, or implicitly indicating the number of indicated technical features. Therefore, features defined with "first" and "second" can explicitly or implicitly include one or more features. In the description of this disclosure, a word "multiple" means two or more, unless expressly defined otherwise.

In this disclosure, the terms "or" and "and/or" are used to describe the association between related objects and denote non-exclusive inclusion. For example, the expressions "A and/or B" and "A or B" cover the following cases: only A, only B, and both A and B, where A and B may be singular or plural. As another example, the expressions "A, B and/or C" and "A, B or C" cover the following cases: only A, only B, only C, A and B together, A and C together, B and C together, and all of A, B and C, where A, B and C may be singular or plural. In addition, the symbol "/" used herein indicates an "or" relationship between the associated elements preceding and following the symbol. In this disclosure, the term "at least one of A or B" has the same meaning as the aforementioned "A or B", and the term "at least one of A, B or C" has the same meaning as the aforementioned "A, B or C".

In the description of this disclosure, in some embodiments, unless otherwise described, terms "mounted," "connected," and "coupled" shall be construed broadly. For example, it can be a fixed connection, a detachable connection, or an integral connection; it can be a mechanical connection, an electrical connection, or a communicative connection; and it can be a direct connection, or an indirect connection via an intermediate medium, or it can be an internal communication between elements or an interaction between elements.

In this disclosure, unless otherwise described, the description of a first feature being located "above" or "below" a second feature can involve direct contact between the first feature and second feature, rather than direct contact (for example, in contact through additional features between them). Moreover, the first feature being located "over," "above," or "on" the second feature can involve that the first feature is directly above and obliquely above the second feature, or merely represent that a horizontal height of the first feature is higher than a horizontal height of the second feature. The first feature being located "under," "below," or "beneath" the second feature can involve that the first feature is directly below and obliquely below the second feature, or merely represent that a horizontal height of the first feature is lower than a horizontal height of the second feature.

The following disclosure provides many different embodiments or examples for implementing different structures of this disclosure. To simplify the description, components and arrangements of specific examples are described below. It should be noted that, they are merely examples and are not intended to limit this disclosure. In addition, reference numerals, reference letters or reference numerals and reference letters can be repeated in different examples in this disclosure, and this repetition is for a purpose of simplicity and clarity, and does not in itself represent a relationship between at least one of various implementation manners or arrangements discussed. In addition, this disclosure provides examples of various specific processes and materials, but These examples are merely examples and do not limit this disclosure.

This disclosure provides a LiDAR including an optical transceiver module and a scanner module. In some embodiments, the optical transceiver module may include a transmitter unit, a transmitting lens unit, and a receiver unit. The transmitter unit may generate detection light. The transmitting lens unit can transmit the detection light. The receiving lens unit can be separated from the transmitting lens unit. The receiving lens can transmit echo light generated by reflection of the detection light from an object. In some embodiments, the receiver unit can include a two-dimensional array detector. The two-dimensional array detector may detect the echo light passing through the receiving lens unit. The scanner module may receive the detection light and emit the detection light towards an exterior of the LiDAR, and receive the echo light and emit the echo light towards the optical transceiver module.

In some embodiments, the receiver unit may use the two-dimensional array detector to receive the echo light. By doing so, a receiving field of view corresponding to each detector in the LiDAR can be effectively reduced, an optical resolution of an optical system of the LiDAR can be improved, thereby improving a target resolution capability of the LiDAR. In some embodiments, with respect to the two-dimensional array detector, the optical transceiver module may use the separated transmitting lens unit and receiving lens unit. The transmitting lens unit may transmit the detection light. The receiving lens unit may transmit the echo light. Different lens units are used to transmit the detection light and the echo light, and the detection light and the echo light are not transmitted through the same lens unit, so that aberrations of the transmitting lens unit and the receiving lens unit may be improved, facilitating mass production. The area on the two-dimensional array detector may also be reduced, and costs are lowered.

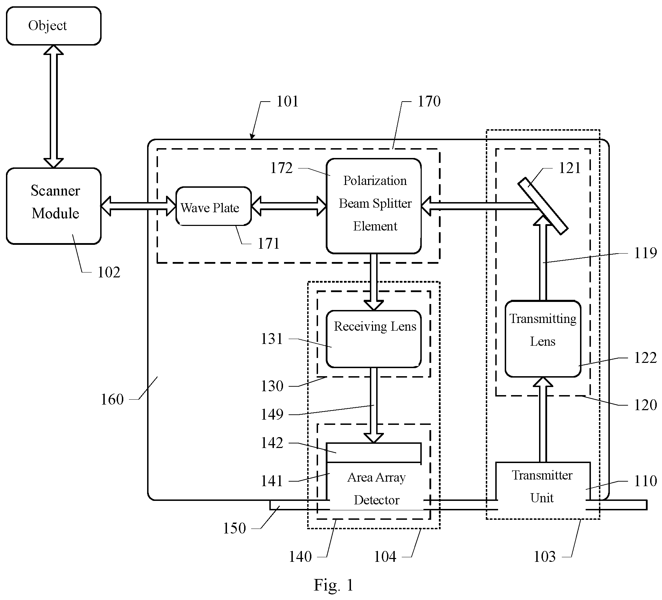

Fig. 1 shows a functional block diagram of an exemplary LiDAR consistent with some embodiments of this disclosure.

In Fig. 1, exemplarily, the LiDAR includes an optical transceiver module 101 and a scanner module 102. The optical transceiver module 101 includes a transmitter unit 110, a transmitting lens unit 120, a receiving lens unit 130, and a receiving unit 140. The transmitter unit 110 can generate detection light 119. The transmitting lens unit 120 can transmit the detection light 119. The receiving lens unit 130 is separated from the transmitting lens unit 120. The receiving lens unit 130 can transmit echo light 149 generated by reflection of the detection light 119 from an object. The receiver unit 140 includes a two-dimensional array detector 141. The two-dimensional array detector 141 can detect the echo light 149 passing through the receiving lens unit 130. The scanner module 102 may receive the detection light 119 and emit the detection light 119 towards an exterior of the LiDAR, and receive the echo light 149 and emit the echo light 149 towards the optical transceiver module 101.

In some embodiments, the receiver unit uses the two-dimensional array detector 141 to receive the echo light 149. Thus, the receiving field of view corresponding to each detector in the LiDAR may be reduced, the optical resolution of the optical system of the LiDAR may be improved, thereby improving the target resolution capability of the LiDAR. In some embodiments, with respect to the two-dimensional array detector 141, the optical transceiver module 101 may use the separated transmitting lens unit 120 and receiving lens unit 130. The transmitting lens unit 120 may transmit the detection light 119. The receiving lens unit 130 can transmit the echo light 149. Different lens units are used to transmit the detection light 119 and the echo light 149, which are not transmitted through the same lens unit. Thus, aberrations of the transmitting lens unit 120 and the receiving lens unit 130 may be improved, facilitating the mass production. The area on the two-dimensional array detector 141 may also be reduced, and the costs are lowered.

In some embodiments, the optical transceiver module 101 can emit and receive optical signals. The transmitter unit 110 can generate detection light 119.

In some embodiments, the transmitter unit 110 can include multiple light sources 111. One light source 111 may generate a beam of the detection light 119. The light source 111 can be a laser. For example, the laser can be a vertical-cavity surface-emitting laser ("VCSEL"), an edge-emitting laser ("EEL"), other light-emitting components that generate laser light. The laser light emitted by the laser may have a wavelength of any one of 905 nanometers (nm), 940 nm, and 1550 nm, and may also emit laser light of other wavelengths.

In some embodiments, the multiple light sources 111 of the transmitter unit 110 may be VCSELs, and the detection light 119 generated by the VCSEL may be polarized light, such as P-polarized light.

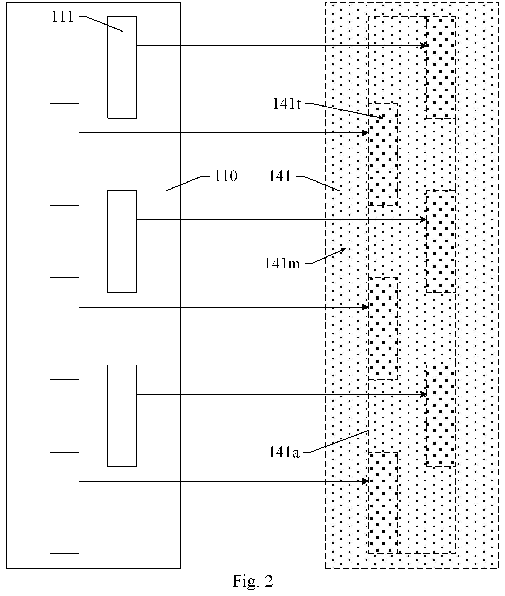

Fig. 2 shows a structure of a transmitter unit of the exemplary LiDAR consistent with some embodiments of this disclosure. In Fig. 2, exemplarily, the multiple light sources 111 of the transmitter unit 110 can be arranged in an array. For example, light sources 111 in adjacent columns can be provided in a staggered manner along a column direction. For another example, light sources 111 in adjacent rows may be provided in a staggered manner along a row direction.

In Fig. 2, exemplarily, the transmitter unit 110 includes two columns of the light sources 111. In some embodiments of this disclosure, the transmitter unit 110 can have other columns of light sources, such as 3 columns and 4 columns. This disclosure does not limit the number of columns of the multiple light sources arranged in an array in the transmitter unit.

In some embodiments, in the multiple light sources 111 arranged in an array, the column direction can correspond to a vertical field direction of the LiDAR. The column direction can correspond to a direction perpendicular to a horizontal plane. The row direction can correspond to a horizontal field direction of the LiDAR. The row direction can correspond to a direction parallel to the horizontal plane.

The transmitting lens unit 120 can transmit the detection light 119 to collimate and adjust an optical path.

Continuously referring to Fig. 1, in some embodiments, the transmitting lens unit 120 includes a reflector 121 and a transmitting lens 122. The transmitting lens 122 includes at least one transmitting lens element. The reflector 121 of the transmitting lens unit 120 can reflect the detection light 119 to the scanner module 102.

The reflector 121 can change the optical path of the detection light 119. The transmitting lens 122 can collimate the detection light 119. For example, the transmitting lens 122 can include multiple transmitting lens elements (e.g., a spherical lens or an aspherical lens), and optical axes of the multiple transmitting lens elements may coincide.

Referring to Fig. 1 and Fig. 2, exemplarily, the number of the transmitting lens elements in the transmitting lens 122 ranges from 2 to 6. In some embodiments, the reflector 121 may be provided in an optical path between two transmitting lens elements in the multiple transmitting lens elements.

In some embodiments, the optical transceiver module 101 includes: a support member 160. At least the transmitting lens unit 120 is fixed to the support member 160.

The support member 160 can carry and locate optical elements. In some embodiments, the support member 160 is merely a mechanical member. By using a single mechanical member to carry the optical elements, the optical elements can be massively produced.

Continuously referring to Fig. 1, exemplarily, the transmitting lens unit 120 is fixed to the support member 160. In some embodiments, all transmitting lens elements in the transmitting lens 122 and the reflector 121 are fixedly connected to the support member 160.

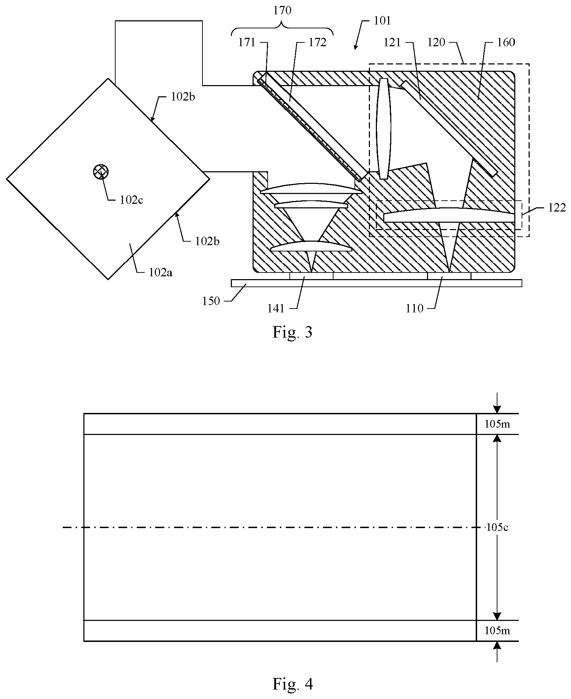

Fig. 3 shows a structure of an optical path of the exemplary LiDAR consistent with some embodiments of this disclosure. Referring to Fig. 1 and Fig. 3, exemplarily, the optical transceiver module 101 includes a beam splitter unit 170. The beam splitter unit 170 can transmit the detection light 119 transmitted by the transmitting lens unit 120 to the scanner module 102.The beam splitter unit 170 can further transmit the echo light 149 transmitted by the scanner module 102 to the receiving lens unit 130.

The beam splitter unit 170 can separate the optical path of the detection light 119 from an optical path of the echo light 149. In some embodiments, the beam splitter unit 170 includes a polarization beam splitter element 172 and a wave plate 171. The wave plate 171 is located in an optical path between the polarization beam splitter element 172 and the scanner module 102. For example, the polarization beam splitter element 172 can be a polarizing beam splitter. The wave plate 171 can be a 1/4 wave plate. Using a polarization principle for beam splitting can acquire higher transmission efficiency under volume constraints of the LiDAR, thereby ensuring a long-range detection capability of the LiDAR. Moreover, compared with a polarization beam splitter element of a prism structure, costs of a polarization beam splitter element with a flat plate structure are lower, which can further control the costs.

Referring to Fig. 3, exemplarily, the wave plate 171 is attached to a surface of the polarization beam splitter element 172 facing the scanner module 102. The wave plate 171 is directly attached to the surface of the polarization beam splitter element 172, which can effectively reduce the number of separating components in the LiDAR. When the wave plate 171 is directly attached to the surface of the polarization beam splitter element 172, an anti-reflection coating may not be needed for the wave plate 171 and a bonded surface between the wave plate 171 and the polarization beam splitter element 172 , which can effectively reduce coating costs. The wave plate 171 and the polarization beam splitter element 172 are fixedly connected, which can reduce the number of positioning surfaces, thereby lowering mechanical design complexity and costs and can reduce the number of assembly elements and lower the production costs.

In some embodiments, the detection light incident on the polarization beam splitter element 172 can be linearly polarized light, such as P-polarized light. For example, the linearly polarized light can be directly generated by the VCSEL. For another example, the linearly polarized light can be formed using a polarizer. The polarization beam splitter element 172 can enable the incident linearly polarized light to be converted into circularly polarized light for emission, and after the detection light 119 in a circularly polarized state transmits the wave plate 171, it can emit from the beam splitter unit 170.

Referring to Fig. 1, exemplarily, the transmitting lens unit 120 is fixed to the support member 160. The beam splitter unit 170 is also fixed to the support member 160. The transmitting lens unit 120 and the beam splitter unit 170 are both fixed to the support member 160. All transmitting lens elements in the transmitting lens 122 and the reflector 121, and the polarization beam splitter element 172 and the wave plate 172 in the beam splitter unit 170 are all fixedly connected to the support member 160.

Continuously referring to Fig. 1, exemplarily, the scanner module 102 can change an emission direction of the detection light 119 to form a scanning field. The scanner module 102 can reflect the detection light 119 to an exterior of the LiDAR. The scanner module 102 can reflect the echo light 149 to the optical transceiver module 101.

Continuously referring to Fig. 1, exemplarily, the scanner module 102 can be a one-dimensional scanner module. For example, in Fig. 3, the scanner module 102 includes a single-direction rotating mirror or hereinafter referred to as a rotating mirror. In some embodiments, the scanner module 102 can further include a galvanometer scanner, and the galvanometer scanner includes a Micro-Electro-Mechanical System (MEMS) mirror and a Galvanometer (Galvo) mirror.

In some embodiments, the scanner module 102 includes a polygonal mirror 102a. The polygonal mirror 102a can include multiple reflecting surfaces 102b. In some embodiments, the multiple reflecting surfaces 102b all can rotate around a rotating shaft 102c. In some embodiments, angles between different reflecting surfaces 102b and the rotating shaft 102c are partially the same. For example, an angle between at least one reflecting surface 102b and the rotating shaft 102c is different from an angle between other reflecting surfaces 102b and the rotating shaft 102c.

Continuously referring to Fig. 3, exemplarily, the polygonal mirror 102a is a foursided mirror. The polygonal mirror 102a has four reflecting surfaces 102b. Angles between the four reflecting surfaces 102b and the rotating shaft 102c are partially the same. Among the four reflecting surfaces 102b, an angle between at least one reflecting surface 102b and the rotating shaft 102c is different from an angle between other reflecting surfaces 102b and the rotating shaft 102c.

In some embodiments, the polygonal mirror has an even number of reflecting surfaces. In some embodiments, angles between adjacent reflecting surfaces and the rotating shaft are different, while angles between spaced-apart reflecting surfaces and the rotating shaft are the same. Continuously referring to Fig. 3, exemplarily, in the polygonal mirror 102a (foursided mirror) of the scanner module 102, angles between the four reflecting surfaces 102b and the rotating shaft 102c are +1°, -1°, +1°, and -1° in sequence.

In some embodiments, positive and negative values of the angles between the reflecting surfaces 102b and the rotating shaft 102c can represent that angular directions formed between the reflecting surfaces 102b and the rotating shaft 102c are different. For example, the reflecting surfaces 102b, each having an angle of +1° with the rotating shaft 102c, share a same angular direction. For another example, an angular direction formed between the reflecting surface 102b having an angle of +1° with the rotating shaft 102c is opposite to an angular direction formed between the reflecting surface 102b having an angle of -1° with the rotating shaft 102c.

Continuously referring to Fig. 3, exemplarily, the detection light 119 can be scanned in a horizontal direction via the scanner module 102 so as to form the horizontal field of the LiDAR. The rotating shaft 102c of the polygonal mirror 102a intersects the horizontal plane, for example, is perpendicular thereto. In some embodiments, a vertical field range of the detection light 119 transmitted by the beam splitter unit 170 can be from -11° to +11°. In some embodiments, a vertical field range formed by the detection light 119 reflected and emitted by the scanner module 102 can be from -13° to +13°.

Fig. 4 shows a field of the exemplary LiDAR consistent with some embodiments of this disclosure. Referring to Fig. 4, exemplarily, a vertical field (for example, a vertical field representing the LiDAR) formed by the emitted detection light 119 includes a central region 105c and edge regions 105m located on two sides of the central region 105c. In some embodiments, a vertical field range corresponding to the central region 105c can be from -9° to +13°. In some embodiments, vertical field ranges of the edge regions 105m can be from -13° to +13° and +9° to +13°, respectively. The detection light 119 reflected by all reflecting surfaces 102b all can cover the central region 105c. In some embodiments, the detection light 119 reflected by adjacent reflecting surfaces 102b covers different edge regions 105m. For example, the detection light 119 reflected by one reflecting surface 102b can cover an edge region 105m on an upper side. For another example, the detection light 119 reflected by adjacent reflecting surface 102b can cover an edge region 105m on a lower side. In some embodiments, the central region 105c has a relatively high frame rate, the edge regions 105c have a relatively low frame rate. In some embodiments, the central region 105c is a high frame rate region, and the edge regions 105c are low frame rate regions.

In some embodiments, through a design of the angles between different reflecting surfaces 102b in the polygonal mirror 102a and the rotating shaft 102c in the scanner module 102, different field directions can be adjusted, which, thus, expands a field range without increasing design difficulty in a lens and increasing an aperture of the lens. Further, such a solution can lower the costs and also can lower a height of the LiDAR.

Referring to Fig. 1 and Fig. 3, exemplarily, the scanner module 102 can be located in an optical path between the beam splitter unit 170 and external space of the LiDAR. In some embodiments, the scanner module 102 can receive the detection light 119 transmitted by the beam splitter unit 170 and reflect the received detection light 119 to the external space of the LiDAR. In some embodiments, the scanner module 102 further can receive the echo light 149 generated by the reflection of the detection light 119 from the object in the external space, and reflect the received echo light 149 to the beam splitter unit 170. The beam splitter unit 170 further can transmit the echo light 149 to the receiving lens unit 130.

In some embodiments, the detection light 119, which is transmitted through the beam splitter unit 170 and is circularly polarized, can be reflected by the scanner module 102 to the exterior of the LiDAR, and then reflected by the object to form the echo light 149. Without considering a depolarization influence during an external transmission process of the LiDAR, a polarization state of the echo light 149 is substantially the same as a polarization state of the detection light 119, and the echo light 149 can also be the circularly polarized light.

In some embodiments, the scanner module 102 can reflect the received echo light 149 to the beam splitter unit 170. The echo light 149 incident on the beam splitter unit 170 can be transmitted through the wave plate 171 and then incident on the polarization beam splitter element 172.

In some embodiments, during a process of light beam transmission, the detection light 119, after being emitted from the polarization beam splitter element 172, can be transmitted to the scanner module 102 through the wave plate 171. In some embodiments, the echo light 149 is also transmitted through the wave plate 171 before being incident on the polarization beam splitter element 172. After being reflected by the polarization beam splitter element 172, the echo light 149 can be transmitted through the wave plate 171 again. In this case, the echo light 149 can be transmitted through the wave plate 171 twice. When the wave plate 171 is a quarter wave plate, compared with the detection light 119 emitted from the polarization beam splitter element 172 and the echo light 149 incident on the beam splitter unit 170, a phase of the echo light 149 emitted from the beam splitter unit 170 is changed by π/2. In this case, the echo light 149 can remain as the circularly polarized light. In some embodiments, the polarization beam splitter element 172 can transmit the incident echo light 149 to the receiving lens unit 130, thereby achieving separation between the optical path of the detection light 119 and the optical path of the echo light 149.

In some embodiments, the receiving lens unit 130 is separated from the transmitting lens unit 120. The receiving lens unit 130 can be located downstream of the beam splitter unit 170 in the optical path of the echo light 149. The receiving lens unit 130 can converge the echo light 149 onto the receiver unit 140.

In some embodiments, the receiving lens unit 130 can includes a receiving lens 131. The receiving lens 131 can include at least one receiving lens element. Continuously referring to Fig. 1 and Fig. 3, exemplarily, the optical path in the receiving lens unit 130 does not change; for example, the receiving lens unit 130 does not include the reflector.

In some embodiments, the receiving lens 131 can converge the echo light 149 transmitted by the beam splitter unit 170 onto the receiver unit 140. For example, the receiving lens 131 can include multiple receiving lens elements. The receiving lens element can be a spherical lens or an aspherical lens. Optical axes of the multiple receiving lens elements can coincide. Continuously referring to Fig. 1, exemplarily, the number of the receiving lens elements in the receiving lens 131 is in a range from 2 to 6.

In some embodiments, the focal length of the receiving lens 131 can be not greater than the focal length of the transmitting lens 122 of the transmitting lens unit 120. In some embodiments, the focal length of the receiving lens 131 can be less than the focal length of the transmitting lens 122 of the transmitting lens unit 120.

The transmitting lens 122 has a larger focal length and can be adapted to the transmitter unit 110 with a larger light-emitting area. The receiving lens 131 has a smaller focal length and can be adapted to the two-dimensional array detector 141 in the receiver unit 140 with a smaller photosensitive area. Thus, a match between a transmission field and a reception field is achieved while the long-range detection capability of the LiDAR is ensured.

In some embodiments, the optical transceiver module 101 can include a transmitting assembly 103 and a receiving assembly 104. For example, the transmitting assembly 103 can include the transmitter unit 110 and the transmitting lens unit 120. The receiving assembly 104 can include the receiving lens unit 130 and the receiver unit 140. As shown in Fig. 1 and Fig. 3, exemplarily, the receiving assembly 104 is located between the transmitting assembly 103 and the scanner module 102. The receiving assembly 104, provided between the transmitting assembly 103 and the scanner module 102, can be adapted to the transmitting lens 122 with a larger focal length and the receiving lens 131 with a smaller focal length, and therefore, the optical path is provided more reasonably.

In some embodiments, a receiving aperture of the receiving lens 131 can be greater than 8 mm. In some embodiments, the larger the receiving aperture of the receiving lens 131, the stronger the long-range detection capability of the LiDAR. The receiving aperture of the receiving lens 131 is sufficiently large to receive enough long-range detection capability by the LiDAR.

In some embodiments, a F-number of the receiving lens 131 can be less than 4. The F-number of a lens, for example, an aperture ratio of the lens, can refer to a ratio of a focal length of the lens to a clear aperture thereof. Luminous flux of the lens is usually inversely proportional to a square of the F-number. For example, the smaller the F-number, the greater the luminous flux. The smaller the F-number of the receiving lens 131, the larger the receiving aperture of the receiving lens 131, and the higher the receiving efficiency of the echo light 149. In some embodiments, the F-number of the receiving lens 131 can be less than 1.8. The F-number of the receiving lens can refer to a reciprocal of the receiving lens relative to the aperture (also referred to as "F-number"). For example, F/5.6 indicates that the F-number is equal to 5.6, i.e., the focal length of the lens is equal to 5.6 times the aperture diameter. The light intensity received on the image plane is generally inversely proportional to the square of the F-number. The F-number is also referred to as lens speed. Lenses with a small F-number generally feature a high lens speed.

In some embodiments of this disclosure, the focal length of the receiving lens 131 is determined based on spacing between adjacent pixels in the two-dimensional array detector 141 and an angular resolution of the LiDAR. For example, the spacing between the adjacent pixels in the two-dimensional detector 141 is Δd, the angular resolution of the LiDAR is Δθ, and the focal length of the receiving lens 131 is $f = \frac{Δd}{Δθ}$.

In some embodiments, the optical transceiver module 101 can further include the support member 160. The receiving lens unit 130, the transmitting lens unit 120, and the beam splitter unit 170 can all be fixed to the support member 160. Thus, the optical elements of the LiDAR may not need adjustment, which can reduce the difficulty in adjusting the LiDAR.

Continuously referring to Figs. 1 and 3, exemplarily, the receiver unit 140 includes the two-dimensional array detector 141. The two-dimensional array detector 141 is located in the optical path of the echo light 149 downstream of the receiving lens unit 130. The two-dimensional array detector 141 can detect the echo light 149 passing through the receiving lens unit 130.

For example, the two-dimensional array detector 141 includes multiple detection elements arranged two-dimensionally. A detection element can be a single-photon detection element. The single-photon detection element is a single-photon avalanche diode ("SPAD").

In some embodiments, different from multiple independently encapsulated detectors arranged two-dimensionally, the multiple detection elements in the two-dimensional array detector 141 can be driven in an addressable manner, such that a distance between adjacent detection elements can be decreased.

In some other embodiments, the multiple detection elements of the two-dimensional array detector 141 can be arranged along two intersecting directions. For example, one of the directions can correspond to the vertical field direction of the LiDAR, and correspond to the direction perpendicular to the horizontal plane. The other direction can correspond to the horizontal field direction of the LiDAR, and correspond to the direction parallel to the horizontal plane.

In some embodiments, the two-dimensional array detector 141 can include multiple pixels. One pixel can include multiple detection elements. For example, at least one pixel can include multiple detection elements. For another example, each of the pixels can include multiple detection elements. In some embodiments, the detection element can be the single-photon detection element. One pixel of the two-dimensional array detector 141 can include multiple detection elements. For example, each of the pixels can include 4 SPADs. Each of the pixels (e.g., 4 SPADs) can output one signal for subsequent circuit sampling and processing. The numbers of the detection elements included by different pixels can be the same or different.

In some embodiments, a size of a pixel in the two-dimensional array detector 141 can be greater than an optical parameter of the receiving lens 131. In some embodiments, the optical parameter can be an imaging quality design parameter. For example, the optical parameter can be a root mean square spot radius (for example, "RMS radius"). Typically, the root mean square spot radius refers to a spot radius received by taking a square root after performing a quadratic average of light intensity distribution. It is an index which can be used to describe a size of the light beam.

In some embodiments, the RMS radius of the lens can affect an optical resolution of a point cloud received by a detector. A smaller RMS radius can represent better optical performance, which is conducive to receiving a clearer point cloud and a higher resolution. The size of the pixel is a parameter of the two-dimensional array detector, and a smaller pixel allows more details to be captured.

To acquire more detailed point clouds, in addition to a smaller size of the pixel of the detector applied, it can further be achieved by better lens performance. If the size of the pixel is much smaller than the RMS radius of the lens, potential resolution may be wasted.

Optimal point cloud quality can be achieved through a mutual cooperation of appropriate lens optical parameters and a suitable size of the pixel. When the RMS spot radius of the lens is less than or equal to a range of the size of the pixel, the resolution of the point cloud can be better improved.

In some embodiments, one pixel of the two-dimensional array detector 141 can include multiple detection elements. For example, each of the pixels includes 2×2 or 3×3 SPADs. The size of each of the pixels of the two-dimensional array detector 141 is greater than the RMS radius of the receiving lens 131.

Continuously referring to Fig. 2, in some embodiments, the receiver unit 140 includes one two-dimensional array detector 141. The two-dimensional array detector 141 includes multiple detection regions 141t, where the multiple detection regions 141t being in one-to-one correspondence with the lasers 111 of the transmitting unit 110, for example, one-to-one correspondence, either many-to-one or one-to-many.

The receiver unit 140 uses an addressable manner of the two-dimensional array detector. Each laser of the transmitter unit 110 can correspond to one detection region 141t of the two-dimensional array detector 141 in the receiver unit 140. Each of the detection regions 141t can include at least one pixel. For example, at least one detection region 141 (for example, each of the detection regions 141) can include m×n pixels. At least one pixel (for example, each of the pixels) can generate p cloud points. In the cloud points of the LiDAR, the number of points in the vertical field can be n×p. Thus, densification of the vertical field can be achieved, thereby improving a density and the resolution of the point cloud.

In some embodiments, a relationship between a light-emitting area Sₜₓ of the laser, a focal length fₜₓ of the transmitting lens 122, and a field range θₜₓ of the transmission field can be as follows: fₜₓ×θₜₓ=Sₜₓ. In some embodiments, a relationship between a photosensitive area Sᵣₓ of the detection region 141 corresponding to the laser, a focal length fᵣₓ of the receiving lens 131, and a field range θᵣₓ of the reception field can be as follows: fᵣₓ×θᵣₓ=Sᵣₓ.

In some embodiments, when an optical power density of the laser in the transmitter unit 110 is limited, the laser with a larger light-emitting area can improve the long-range detection capability of the LiDAR. When the focal length fₜₓ of the transmitting lens 122 is greater than the focal length fᵣₓ of the receiving lens 131, the transmission field and the reception field can be matched, to make the photosensitive area of the detection region 141t corresponding to the laser smaller, thereby helping to improve the optical resolution of the LiDAR.

Continuously referring to Fig. 2, exemplarily, the two-dimensional array detector 141 can further include a compensation region 141m. The compensation region 141m can encircle multiple detection regions 141t. The two-dimensional array detector 141 can be driven in an addressable manner. Thus, alignment of the transmission field and the reception field can be achieved through addressable driving. In some embodiments, compensating for alignment errors between the transmission field and the reception field using the compensation region 141m can reduce the difficulty in optical alignment and adjustment, and even avoid an optical alignment and adjustment process, thereby achieving adjustment-free alignment of the laser and the detector integrated on the common board.

In some embodiments, the optical transceiver module 101 can further include a circuit board 150. The laser 111 of the transmitter unit 110 and the two-dimensional array detector 141 of the receiver unit 140 can be fixed to the circuit board 150. Continuously referring to Fig. 1, exemplarily, the laser 110 of the transmitter unit 111 and the two-dimensional array detector 141 of the receiver unit 140 can be provided on the same circuit board 150. The laser of the transmitter unit and the two-dimensional array detector of the receiver unit can be integrated on the common board, which can facilitate mass production.

In some embodiments, the focal length fₜₓ of the transmitting lens 122 can be greater than the focal length fᵣₓ of the receiving lens 131. When a difference between the focal length fₜₓ of the transmitting lens 122 and the focal length fᵣₓ of the receiving lens 131 is appropriate, the laser of the transmitter unit 110 and the two-dimensional array detector 141 of the receiver unit **1**40 can be integrated on the common board.

Continuously referring to Fig. 1, exemplarily, the receiver unit 140 further includes an optical filter 142. The optical filter 142 can be located in an optical path between the receiving lens 131 and the two-dimensional array detector 141. The optical filter 142 can filter out stray light.

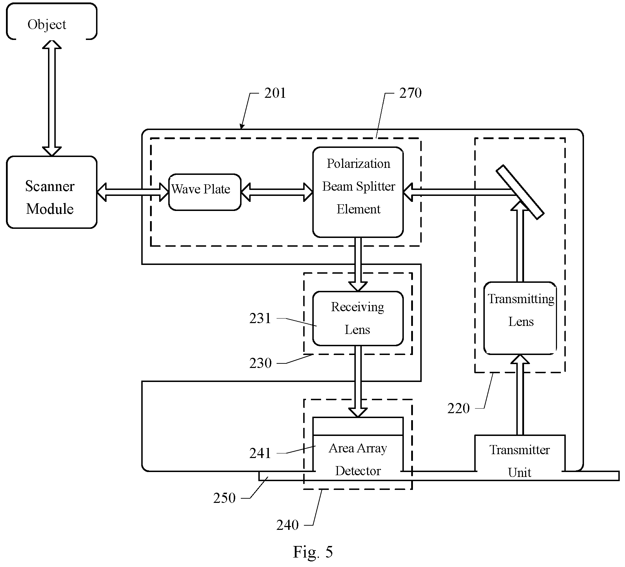

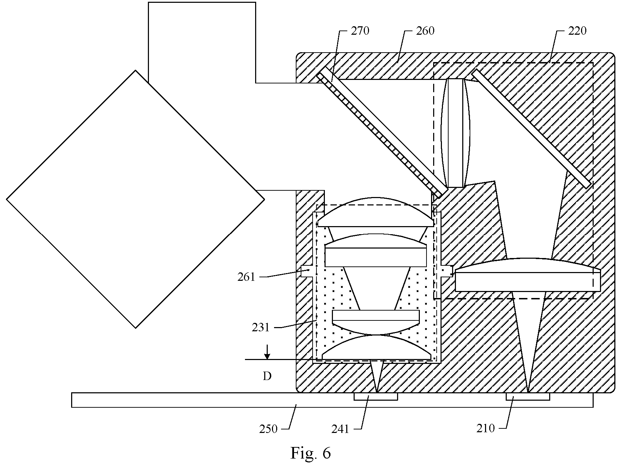

Fig. 5 shows a functional block diagram of another exemplary LiDAR consistent with some other embodiments of this disclosure., Fig. 6 shows a structure of an optical path of another exemplary LiDAR consistent with some other embodiments of this disclosure.

Similarities of Fig. 5 and Fig. 6 with the embodiments are not repeated herein. A difference from the embodiments described in conjunction with Fig. 1 to Fig. 4 is that, in Fig. 5 and Fig. 6, exemplarily, the transmitting lens unit 220 and the beam splitter unit 270 are both fixed to the support member 260. The optical transceiver module 201 further includes a receiving lens support member 261. The receiving lens 231 is fixed to the receiving lens support member 261. The receiving lens support member 261 is movably connected to the support member 260.

Referring to Fig. 6, exemplarily, the multiple receiving lens elements of the receiving lens 231 in the receiving lens unit 230 are all fixedly connected to the receiving lens support member 261, and the receiving lens support member 261 is movably connected to the support member 260. In some embodiments, the receiving lens support member 261 can be adjusted relative to the support member 260 in multiple dimensions, where the dimensions can include one of two to five dimensions. In some embodiments, by using the movable receiving lens support member 261 and employing active alignment ("AA focusing") technologies, a distance D between the receiving lens 231 and the two-dimensional array detector 241 of the receiver unit 140 can be changed, thereby achieving back focus adjustment of the receiving lens unit 230, such that the optical resolution can be improved, the image quality of the optical system of the LiDAR can be enhanced, and the target resolution capability of the LiDAR can be improved.

In some embodiments, the receiving lens support member 261 can be fixed by at least one of welding and adhesive bonding. For example, after the back focus adjustment of the receiving lens unit 230, the receiving lens support member 261 and the support member 260 can be fixedly connected by at least one of welding and adhesive bonding.

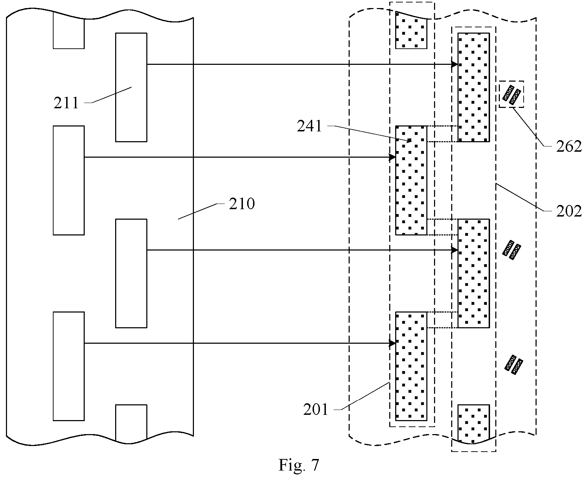

Fig. 7 shows a structure of a transmitter unit of another exemplary LiDAR consistent with some other embodiments of this disclosure.

Referring to Fig. 7, exemplarily, a circuit board 250 fixing the two-dimensional array detector 241 has multiple focusing marks 262. The focusing marks 262 can perform the alignment during a process of the back focus adjustment. The focusing marks 262 can have high-precision patterns. In some embodiments, during the process of the back focus adjustment, whether different field positions of the two-dimensional array detector 241 are at an optimal back focal plane position can be determined based on clarity of the patterns of the focusing marks 262. In some embodiments, positions of the focusing marks 262 can represent pixel positions of the two-dimensional array detector 241. Thus, the alignment between the transmission field and the reception field can be performed.

For example, the focusing marks 262 can be shaped as inclined double rectangles. In some embodiments, the focusing marks can also be circular, square, triangular, pentagonal, hexagonal, cross-shaped, target-shaped, or any other shape.

Continuously referring to Fig. 7, exemplarily, the receiver unit 240 can include multiple two-dimensional array detectors 241. The multiple two-dimensional array detectors 241 can be in one-to-one correspondence with multiple lasers 211 of the transmitter unit 210. The multiple two-dimensional array detectors 241 can form the receiver unit 140, which can reduce an area of a single two-dimensional array detector 241, and lower the costs.

In some embodiments, the two-dimensional array detector 141 can include multiple pixels. Each of the pixels in the multiple pixels can include the multiple detection elements. For example, the pixels can include multiple detection elements. The detection elements included in different pixels can be the same or different. In some embodiments, the detection element can be the single-photon detection element (for example, the single-photon detection element is "SPAD".

In some embodiments, the multiple two-dimensional array detectors 241 can be arranged in an array. For example, the two-dimensional array detectors 241 in adjacent columns can be provided in a staggered manner along the column direction. For another example, the two-dimensional array detectors 241 in adjacent rows can be provided in a staggered manner along the row direction. Referring to Fig. 7, exemplarily, the multiple two-dimensional array detectors 241 are arranged in an array. The two-dimensional array detectors 241 in adjacent columns are provided in a staggered manner along the column direction. For example, one two-dimensional array detector in a certain column can be located between two two-dimensional array detectors in an adjacent column along the column direction.

For example, Fig. 7 shows four two-dimensional array detectors 241 in the receiver unit 240, arranged in a 2×2 array. A first column 201 and a second column 202 are adjacent along the row direction. The two-dimensional array detector 241 in the first column 201 is located between two adjacent two-dimensional array detectors 241 in the second column 202 along the column direction.

In some embodiments, adjacent two-dimensional array detectors 241 along a staggered direction can have an overlapping region therebetween. For example, continuously referring to Fig. 7, the two-dimensional array detectors 241 in the first column 201 and the two-dimensional array detectors 241 in the adjacent second column 202 along the column direction have overlapping regions in the column direction (as indicated by dashed lines in Fig. 7). Projections of the two-dimensional array detectors 241 in the first column 201 and the two-dimensional array detectors 241 in the second column 202 onto the vertical plane have overlapping regions. The vertical plane is a plane perpendicular to a direction pointing from the first column 201 to the second column 202.

In some embodiments, the adjacent two-dimensional array detectors along the staggered direction can also be staggered completely, and there is no overlapping region between the adjacent two-dimensional array detectors along the staggered direction. For example, exemplarily, the two-dimensional array detectors 241 in the first column 201 and the two-dimensional array detectors 241 in the adjacent second column 202 along the column direction are staggered completely in the column direction and have no overlapping region.

In some embodiments, the optical transceiver module can include the transmitting lens unit and the receiving lens unit. The transmitting lens unit can transmit the detection light, and collimate the detection light. The receiving lens unit can be separated from the transmitting lens unit, and the receiving lens unit can transmit the echo light generated by the reflection of the detection light from the object. The detection light and the echo light are respectively transmitted by the separately provided transmitting lens unit and the receiving lens unit. A design of the transmitting lens unit only needs to satisfy technical requirements for collimation of the detection light, thereby improving a collimation effect of the transmitting lens unit on the detection light. A design of the receiving lens unit only needs to satisfy technical requirements for reception of the echo light, thereby enhancing a reception effect of the receiving lens unit on the echo light. Improvement of the collimation effect of the detection light and enhancement of the reception effect of the echo light are can improve detection performance of the LiDAR.

In some embodiments, the receiver unit can use the two-dimensional array detector to receive the echo light. Thus, the receiving field of view corresponding to each detector in the LiDAR can be reduced, which can improve the optical resolution of the optical system of the LiDAR and the target resolution capability of the LiDAR. With respect to the two-dimensional array detector, in the optical transceiver module, the separated transmitting lens unit and receiving lens unit can be used to transmit the detection light and the echo light, respectively. When different lens units are used to transmit the detection light and the echo light, respectively, the detection light and the echo light are not transmitted through the same lens unit, which can improve the aberrations of the transmitting lens unit and the receiving lens unit, facilitating the mass production, and can further effectively reduce the area requirements on the two-dimensional array detector, thereby lowering the costs.

In some embodiments, the focal length of the receiving lens cannot greater than the focal length of the transmitting lens of the transmitting lens unit. The transmitting lens with the larger focal length can be adapted to the laser with the larger light-emitting area, and the receiving lens with the smaller focal length can be adapted to the detector with the smaller photosensitive area. The transmitting lens with the larger focal length and the receiving lens with the smaller focal length can be adapted to the laser with the larger light-emitting area and the detector with the smaller photosensitive area, while the transmission field and the reception field match, which can improve the long-range detection capability of the LiDAR.

In some embodiments, the size of the pixel in the two-dimensional array detector can be greater than the optical parameter of the receiving lens. The optical parameter of the receiving lens can be a root-mean-square spot radius of the receiving lens. A relationship between the size of the pixel in the two-dimensional array detector and the optical parameter of the receiving lens can affect the point cloud quality and the optical resolution received by the two-dimensional array detector. The size of the pixel in the two-dimensional array detector matches the optical parameter of the receiving lens, which can improve the optical resolution of the LiDAR, acquiring better imaging quality, and improving the point cloud quality of the LiDAR.

In some embodiments, the receiving aperture of the receiving lens can be greater than 8 mm. In some embodiments, the larger the receiving aperture of the receiving lens, the higher the receiving efficiency of the LiDAR for the echo light, and the stronger the long-range detection capability of the LiDAR. A sufficiently large receiving aperture of the receiving lens can improve the receiving efficiency of the echo light and enhancing the long-range detection capability of the LiDAR.

In some embodiments, the F-number of the receiving lens can be less than 4. The F-number of the lens, for example, the aperture ratio of the lens, can be the ratio of the focal length of the lens to the clear aperture thereof. The luminous flux of the lens can be inversely proportional to the square of the F-number. The smaller the F-number, the greater the luminous flux. The smaller the F-number of the receiving lens, the larger the receiving aperture of the receiving lens, and the higher the receiving efficiency of the echo light. A sufficiently small F-number of the receiving lens can improve the receiving efficiency of the echo light.

In some embodiments, the laser of the transmitter unit and the two-dimensional array detector of the receiver unit can be provided on the same circuit board. The laser of the transmitter unit and the two-dimensional array detector of the receiver unit can be integrated on the common board, which is conducive to the mass production of LiDAR.

In some embodiments, the two-dimensional array detector can further include the compensation region. The compensation region can encircle the multiple detection regions. The two-dimensional array detector can be driven in an addressable manner. The two-dimensional array detector can achieve the alignment of the transmission field and the reception field through the addressable driving. Compensating for the alignment errors between the transmission field and the reception field using the compensation region can reduce the difficulty in the optical alignment and adjustment, and even avoid the optical alignment and adjustment process. Therefore, the adjustment-free alignment of the laser and the detector integrated on the common board can be achieved.

In some embodiments, the beam splitter unit can include the polarization beam splitter element and a wave plate. The wave plate can be located in the optical path between the polarization beam splitter element and the scanner module. A solution that uses the polarization principle for the beam splitting can effectively improve the transmission efficiency under the volume constraints of the LiDAR, and improve performance of the LiDAR.

In some embodiments, the wave plate can be attached to the surface of the polarization beam splitter element facing the scanner module. The wave plate is directly attached to the surface of the polarization beam splitter element, and an anti-reflection coating may not be needed for the wave plate and a bonded surface between the wave plate and the polarization beam splitter element, which can effectively reduce coating costs. The wave plate and the polarization beam splitter element can be fixedly connected, which can reduce the number of the positioning surfaces, lower the mechanical design complexity and the costs, and also can reduce the number of the assembly elements and lower the production costs. Furthermore, the polarization beam splitter element can be of the flat plate structure. Compared with the polarization beam splitter element of the prism structure, this solution has lower costs and can further lower the costs of the LiDAR.

In some embodiments, the scanner module can include the polygonal mirror. The polygonal mirror can include multiple reflecting surfaces. The multiple reflecting surfaces all can rotate around the rotating shaft. The angles between different reflecting surfaces and the rotating shaft can be partially the same. When the angles between different reflecting surfaces and the rotating shaft are partially the same, different field directions can be adjusted, which expands a vertical field range of the LiDAR. This solution will not increase the design difficulty in the lens and increase the aperture of the lens, such that the costs can be lowered. Further, this solution can further reduce a size of the circuit board provided with the laser and the two-dimensional array detector, which can effectively lower the height of the LiDAR.

Although this disclosure is disclosed above, this disclosure is not limited to the above embodiments. The description of each embodiment in this disclosure has different emphases. Any part not elaborated or recorded in a certain embodiment may refer to the relevant descriptions of other embodiments. In addition, the embodiments described in this disclosure may be freely combined as required.

## Claims

1. A LiDAR, comprising: an optical transceiver module and a scanner module, wherein
the optical transceiver module comprises: a transmitter unit, wherein the transmitter unit is configured to generate detection light;
a transmitting lens unit, wherein the transmitting lens unit is configured to transmit detection light;
a receiving lens unit, wherein the receiving lens unit is separated from the transmitting lens unit, and the receiving lens unit is configured to transmit echo light generated by reflection of the detection light from an object; and
a receiver unit, wherein the receiver unit comprises a two-dimensional array detector, wherein the two-dimensional array detector is configured to detect the echo light passing through the receiving lens unit; and
the scanner module is configured to receive the detection light and emit the detection light towards an exterior of the LiDAR, and receive the echo light and emit the echo light towards the optical transceiver module.

2. The LiDAR of claim 1, wherein the transmitting lens unit comprises a reflector and a transmitting lens, wherein the transmitting lens comprises at least one transmitting lens element, and the reflector is configured to reflect the detection light to the scanner module.

3. The LiDAR of claim 1 or 2, wherein the receiving lens unit comprises a receiving lens, wherein the receiving lens comprises at least one receiving lens element.

4. The LiDAR of claim 3, wherein a focal length of the receiving lens is determined based on a spacing between adjacent pixels in the two-dimensional array detector and an angular resolution of the LiDAR.

5. The LiDAR of claim 4, wherein the focal length of the receiving lens is not greater than a focal length of the transmitting lens of the transmitting lens unit.

6. The LiDAR of claim 5, wherein a receiving assembly is located between a transmitting assembly and the scanner module, wherein the transmitting assembly comprises: the transmitter unit and the transmitting lens unit, and the receiving assembly comprises: the receiver unit and the receiving lens unit.

7. The LiDAR of claim 3, wherein a size of a pixel in the two-dimensional array detector is greater than an optical parameter of the receiving lens.

8. The LiDAR of claim 3, wherein a receiving aperture of the receiving lens is greater than 8 mm.

9. The LiDAR of claim 3, wherein a F-number of the receiving lens is less than 4.

10. The LiDAR of any one of claims 1-3, wherein a laser of the transmitter unit and a two-dimensional array detector of the receiver unit are provided on a same circuit board.

11. The LiDAR of any one of claims 1-10, wherein the optical transceiver module further comprises: a support member, wherein at least the transmitting lens unit is fixed to the support member.

12. The LiDAR of claim 11, wherein the transmitting lens unit and a beam splitter unit are both fixed to the support member.

13. The LiDAR of claim 11 or 12, wherein the optical transceiver module further comprises: a receiving lens support member, wherein the receiving lens is fixed to the receiving lens support member, and the receiving lens support member is movably connected to the support member.

14. The LiDAR of any one of claims 1-13, wherein a circuit board fixing the two-dimensional array detector has a plurality of focusing marks.

15. The LiDAR of claim 11, wherein the receiving lens unit, the transmitting lens unit, and the beam splitter unit are all fixed to the support member.

16. The LiDAR of any one of claims 1-15, wherein the receiver unit comprises one two-dimensional array detector, wherein the two-dimensional array detector comprises: a plurality of detection regions, and the plurality of detection regions are in one-to-one correspondence with a plurality of lasers of the transmitter unit.

17. The LiDAR of claim 16, wherein the two-dimensional array detector further comprises: a compensation region, wherein the compensation region encircles the plurality of detection regions.

18. The LiDAR of any one of claims 1-17, wherein the receiver unit comprises a plurality of two-dimensional array detectors, wherein the plurality of two-dimensional array detectors are in one-to-one correspondence with the plurality of lasers of the transmitter unit.

19. The LiDAR of claim 18, wherein the plurality of two-dimensional array detector are arranged in an array, and two-dimensional array detectors in adjacent columns are provided in a staggered manner along a column direction or two-dimensional array detectors in adjacent rows are provided in a staggered manner along a row direction.

20. The LiDAR of any one of claims 1-19, wherein the two-dimensional array detector comprises a plurality of pixels, wherein at least one pixel in the plurality of pixels comprises a plurality of detection elements.

21. The LiDAR of claim 20, wherein a detection element is a single-photon detection element.

22. The LiDAR of any one of claims 1-20, wherein the optical transceiver module further comprises: the beam splitter unit, wherein the beam splitter unit is configured to transmit the detection light transmitted by the transmitting lens unit to the scanner module, and is configured to transmit the echo light transmitted by the scanner module to the receiving lens unit.

23. The LiDAR of claim 22, wherein the beam splitter unit comprises: a polarization beam splitter element and a wave plate, wherein the wave plate is located in an optical path between the polarization beam splitter element and the scanner module.

24. The LiDAR of claim 23, wherein the wave plate is attached to a surface of the polarization beam splitter element facing the scanner module.

25. The LiDAR of any one of claims 1-24, wherein the scanner module comprises a polygonal mirror, wherein the polygonal mirror comprises a plurality of reflecting surfaces, the plurality of reflecting surfaces all rotate around a rotating shaft, and angles between different reflecting surfaces in the plurality of reflecting surfaces and the rotating shaft are partially the same.

26. The LiDAR of claim 25, wherein the polygonal mirror has an even number of the reflecting surfaces, wherein angles between adjacent reflecting surfaces in the reflecting surfaces and the rotating shaft are different, while angles between spaced-apart reflecting surfaces in the reflecting surfaces and the rotating shaft are the same.
